# EUROPEAN PATENT SPECIFICATION

(11) **EP 3 102 030 B1**
(45) Date of publication and mention of the grant of the patent: **20.09.2017**
(21) Application number: 15707812.2
(22) Date of filing: 02.02.2015
(51) Int. Cl.: A01M 1/20

(54) **A SUPPORT FOR A PRODUCT INTENDED TO BE BURNED, HAVING A SPIRAL SHAPE FOR RELEASE OF PERFUMED OR INSECTICIDE SUBSTANCES INTO THE AIR**
TRÄGER FÜR EIN ZUR VERBRENNUNG BESTIMMTES PRODUKT MIT SPIRALFORM ZUR FREISETZUNG VON PARFUM- ODER INSEKTIZIDSUBSTANZEN IN DIE LUFT
SUPPORT POUR UN PRODUIT DESTINÉ À ÊTRE BRÛLÉ, AYANT UNE FORME DE SPIRALE POUR LIBÉRER DES SUBSTANCES PARFUMÉES OU INSECTICIDES DANS L'AIR

(30) Priority: 07.02.2014 IT BO20140055
(43) Date of publication of application: 14.12.2016
(73) Proprietor: Salvatore, Giancarlo, 03043 Cassino (Frosinone) (IT)
(72) Inventor: Salvatore, Giancarlo, 03043 Cassino (Frosinone) (IT)
(74) Representative: Dall'Olio, Christian
(86) International application number: PCT/IB2015/050780
(87) International publication number: WO 2015/118438

(56) References cited:
- GB-A- 1 539 491
- GB-A- 2 139 895

## Description

### FIELD OF THE INVENTION

The present invention relates to the technical sector of products intended to be burned, having a spiral shape for release of perfumed or insecticide substances into the air. In particular, the invention relates to a support for a product intended to be burned having a spiral shape, for release of perfumed or insecticide substances into the air, see e.g. GB 2 139 895 A.

### DESCRIPTION OF THE PRIOR ART

As is known, these products intended to be burned having a spiral shape release perfumed or insecticide substances into the air following combustion of the products.

In the case of release of insecticide substances, these products to be burned having a spiral shape are also known as mosquito coils.

A product to be burned having a spiral shape for release of perfumed or insecticide substances into the air generally require a support.

For example, the support can be constituted by a metal plate comprising a main body having a substantially rectangular shape and an anchoring element borne by the main body.

In particular, the main body of the metal plate comprises a rest portion, which is arranged resting on a flat surface or on a floor surface; the anchoring element projects with respect to the rest portion (and is generally in a single body therewith) and is anchored to the product having a spiral shape intended to be burned. For this purpose, the product intended to be burned having a spiral shape includes a hole in which the anchoring element can be inserted. The support for a product intended to be burned having a spiral shape for release of perfumed or insecticide substances into the air as described above exhibits, however, a drawback.

In fact, with the above-mentioned known-type support, the combustion of the product having a spiral shape to be burned has been shown to be very rapid in ventilated environments, whether inside or outside.

This drawback is particularly evident if we consider, for example, the case of mosquito coils, which are often used externally: when it is windy, their rapid combustion creates on the one hand a loss of efficiency, as the insecticide substance is released only for a short time into the environment, and on the other hand an increase in costs, as the mosquito coils have to be replaced frequently.

### SUMMARY OF THE INVENTION

The aim of the present invention is to obviate the above-described drawback.

The aim is attained with a support for a product having a spiral shape intended to be burned for release of perfumed or insecticide substances into the air, as in claim 1.

With the support of the invention a slower combustion of the product having a spiral shape intended to be burned is advantageously guaranteed, with respect to prior-art supports in the case of internal or external ventilated environments.

Consequently, with respect to the known supports, with the disclosed support on the one hand a more enduring release of the substance is obtained, i.e. an increase in the efficiency of the product having a spiral shape intended to be burned, while on the other hand a reduction in costs is obtained, as the product having a spiral shape to be burned needs replacing less frequently.

### BRIEF DESCRIPTION OF THE DRAWINGS

Specific embodiments of the invention and further advantages will be more fully detailed in the following claim, with the aid of the accompanying tables of drawings, in which:
- Figure 1 is a schematic lateral view of a support for a product having a spiral shape intended to be burned in a first embodiment of the invention, with some elements illustrated in plan view better to understand the conformation thereof;
- Figures 2 and 3 are two schematic views of two embodiments of the invention, with some elements illustrated in plan view better to understand the conformation thereof.

### DESCRIPTION OF PREFERRED EMBODIMENTS

With reference to the accompanying figures of the drawings, reference numeral (1) denotes a support for a product having a spiral shape to be burned for release into the air of perfumed or insecticide substances according to the present invention.

The support (1) comprises: a main body (2); an anchoring element (3) borne by the main body (2) so as to anchor, when the support (1) is in use, a product having a spiral shape (not illustrated) intended to be burned for release into the air of perfumed or insecticide substances.

In particular, the main body (2) has a spiral shape (S) and is orientated vertically when the support (1) is in use.

Further, the main body (2) is dimensioned such that when the support (1) is in use and the product having a spiral shape intended to be burned is anchored to the anchoring element (3), the orthogonal projection thereof on a vertical plane (not illustrated) of the profile of the main body (2) forms a first figure which encloses a second figure which is obtained by the orthogonal projection on a vertical plane of the profile of the product having a spiral shape intended to be burned.

In a presence of wind (in particular in an orthogonal direction to the above-mentioned vertical plane), the product having a spiral shape intended to be burned is advantageously consumed, by combustion, more slowly with respect to a case in which a prior-art support were to be used.

In other words, the product having a spiral shape intended to be burned is sheltered from the wind, both due to the fact the main body (2) has a spiral shape (S) and is orientated vertically when the support (1) is used, and due to the appropriate dimensioning of the main body (2).

In other words, as regards the dimensioning of the main body (2), it can be stated that when the support (1) is in use, each spire (SO) of the spiral shape (S) of the main body (2) is aligned with and adjacent to a corresponding spire of the product having a spiral shape intended to be burned; further, a minimum distance between the two peripheral edges of each spire (S) (i.e. the width of the spire) of the spiral shape is at least equal to a minimum distance between the two peripheral edges of the corresponding spire (i.e. the width of the spire) of the product having a spiral shape intended to be burned.

In a preferred embodiment of the invention, the first figure and the second figures substantially coincide.

This embodiment advantageously enables decoupling two products having a spiral shape intended to be burned (for example products known as mosquito coils) which are usually packed and sold coupled to one another, one fitted inside the other (lying on a same ideal plane). It is in fact possible to position, for example, the two mosquito coils resting on the main body (2) of the support (1) (on the opposite side to where the anchoring element (3) is borne) and exert a pressure on the two coils in the direction of the main body (2). Following this operation, a coil is positioned (i.e. fixed) on the main body (2), while the other coil decouples from the first, crossing the empty space between one coil and the next of the spiral shape of the main body (2) and the other.

In the prior art, on the other hand, the decoupling process for example of two mosquito coils was not only awkward, but also very hard: frequently, in fact, it resulted in damage to or breakage of one or both the mosquito coils.

This led not only to long decoupling times but also to high costs as the breakage of the coils made them hard to use.

Still with reference to the figures, the support (1) of the invention further comprises a support (4) fixable to the main body (2) for supporting the main body (2) vertically orientated when the support (1) is in use.

For example, the main body (2) and the support (4) can be made in a single body. Alternatively the main body (2) and the support (4) can be removably fixable to one another.

In particular, the support can comprise a stem (4) fixable by a first end (40) thereof to the main body (2).

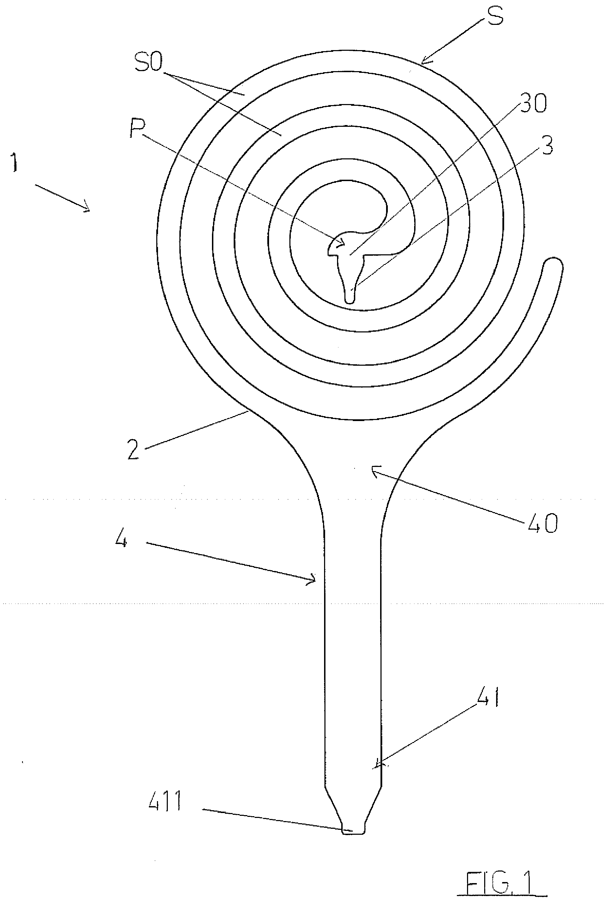

For example, the second end (41) of the stem (4), opposite the first end (40), comprises a point (411) which can be introduced into a terrain so as to support the main body (2) vertically orientated when the support (1) is in use (see figure 1).

With this embodiment the support (1) is absolutely suitable to be used in an external environment, for example it can be planted in the ground of a garden or internally of a vase.

Clearly the length of the stem (4) can be decided according to needs and preferences.

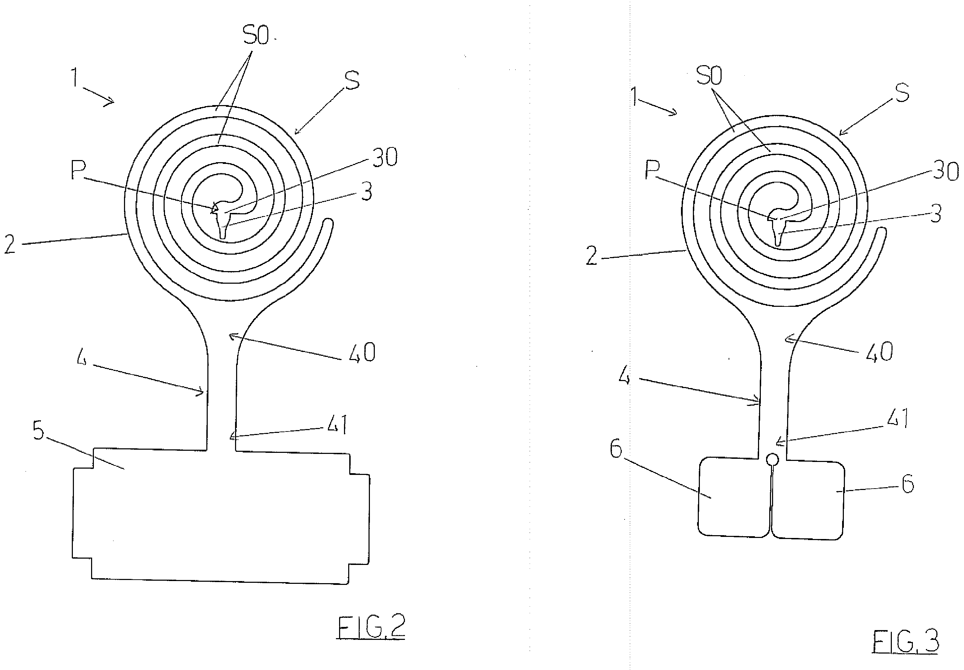

In a variant, the support (1) can further comprise a collecting tray (5) which collects ash and residues of a combustion of the product having a spiral shape intended to be burned (see figure 2). When the support (1) is in use the collecting tray (5) will clearly be arranged below the product having a spiral shape intended to be burned.

The tray (5) can be fixed, in a removable or unremovable way, for example to the second of the stem (4), if present.

Alternatively the collecting tray (5) can be fixed to the main body (2).

The variant advantageously enables not losing the waste produced by the combustion of the product having a spiral shape intended to be burned into the environment, whether internal or external,

The collecting tray (5) can alternatively contain one or more perfumed or insecticide candles (for example three).

In a further variant, the support (1) can further comprise at least a support foot (6), fixable to the second end (41) of the stem (4), in such a way as to support the main body (2) vertically orientated when the support (1) is in use.

Two support feet (6) can be preferably included, as in the case schematically illustrated in figure 3.

Note that in the figure the tray (5) and the feet (6) have been shown in plan view, better to illustrate the conformation thereof.

In particular, the anchoring element (3) can be insertable in a hole included at the pole of the product having a spiral shape intended to be burned.

By the expression "pole" is clearly meant the point about which the spiral winds (or develops).

With reference to the figures, the anchoring element (3) is arranged at the pole (P) of the spiral shape (S) of the main body (2) and is transversal (preferably orthogonal) with respect to the above-mentioned spiral shape (S) of the main body (2).

In detail, the anchoring element (3) can exhibit a portion (30), fixed to the pole (P) of the spiral shape (S) of the main body (2) and exhibits a thickness which tapers along a development thereof starting from the portion (30) and moving in an external direction. In other words, the anchoring element (3) can exhibit a pyramid shape, a truncated pyramid shape, a truncoconical shape or in any case a shape which tapers starting from the above-mentioned portion (30) during the development thereof in an external direction.

In particular, the anchoring element (3) and in detail the relative portion (30), is dimensioned in such a way that once the product having a spiral shape intended to be burned is anchored, i.e. once the anchoring element (3) is inserted in the hole afforded in the product having a spiral shape intended to be burned, it is not in contact with the main body (2). In this way the overheating of the main body (2) is advantageously avoided, while at the same time the best possible combustion of the product having a spiral shape intended to be burned is guaranteed.

Note that in the accompanying figures the anchoring element (3) has been shown in plan view better to understand the conformation thereof.

In particular, the support (1) is preferably made of a fireproof material. For example, the support (1) can be made or can comprise iron material, glass material, plastic material, stone material, each treated so as to be fireproof.

It will be evident that the support (1) according to the invention also has a decidedly improved aesthetic appeal with respect to the known-type supports. In fact, the support (1) can be maintained arranged in an internal or external environment between one use of a product having a spiral shape intended to be burned and a next one, guaranteeing an optimal aesthetic appeal.

The aesthetic aspect can be determined not only by the materials used, but also the colours used. Further, as regards the collecting tray (5), where present, this can exhibit, for example, jagged or waved edges.

The foregoing has been described by way of non-limiting example, and any eventual constructional variants are understood to be comprised in the scope of the invention as defined in the appended claims.

## Claims

1. A support (1) for a product having a spiral shape, the latter being intended to be burned for release into the air of perfumed or insecticide substances, the support (1) comprising:
a main body (2);
an anchoring element (3) borne by the main body (2) so as to anchor, when the support (1) is in use, a product having a spiral shape intended to be burned for release into the air of perfumed or insecticide substances;
**characterised in that**:
the main body (2) has a spiral shape (S) and is vertically orientated when the support (1) is in use;
and **in that**:
the main body (2) is dimensioned such that when the support (1) is in use and the product having a spiral shape intended to be burned is anchored to the anchoring element (3), the orthogonal projection on a vertical plane of the profile of the main body (2) forms a first figure which encloses a second figure which is obtained by the orthogonal projection on a vertical plane of the profile of the product having a spiral shape intended to be burned.

2. The support (1) of the preceding claim, wherein the first figure and the second figure substantially coincide.

3. The support (1) of claim 1 or 2, further comprising a support (4) fixable to the main body (2) for supporting the main body (2) vertically orientated when the support (1) is in use.

4. The support (1) of the preceding claim, wherein the support (4) comprises a stem (4) fixable by a first end (40) thereof to the main body (2).

5. The support (1) of the preceding claim, wherein the second end (41) of the stem (4), opposite the first end (40), comprises a point (411) which can be introduced into a terrain so as to support the main body (2) vertically orientated when the support (1) is in use.

6. The support (1) of any one of the preceding claims, further comprising a collecting tray (5) which collects ash and residues of a combustion of the product having a spiral shape intended to be burned.

7. The support (1) of claim 4, further comprising at least a support foot (6), fixable to the second end (41) of the stem (4), opposite the first end (40), in such a way as to support the main body (2) vertically orientated when the support (1) is in use.

8. The support (1) of any one of claims from 3 to 7, wherein the main body (2) and the support (4) are made in a single body.

9. The support (1) of any one of the preceding claims, wherein the anchoring element (3) is arranged at the pole (P) of the spiral shape (S) of the main body (2) and is transversal with respect to the spiral shape (S) of the main body (2).

10. The support (1) of the preceding claim, wherein the anchoring element (3) exhibits a portion (30) fixed to the pole (P) of the spiral shape (S) of the main body (2) and exhibits a thickness which tapers along a development thereof starting from the portion (30) and moving in an external direction.

## Patentansprüche

1. Träger (1) für ein Produkt mit Spiralform, das zur Verbrennung bestimmt ist, um duftende Räuchermittel oder Insektenbekämpfungsmittel in die Luft freizusetzen, wobei der Träger (1) Folgendes beinhaltet:
einen Hauptkörper (2);
ein Verankerungselement (3), das von dem Hauptkörper (2) getragen wird und dazu dient, beim Gebrauch des Trägers (1) ein Produkt mit Spiralform zu verankern, das zur Verbrennung bestimmt ist, um Räuchermittel oder Insektizide in die Luft freizusetzen;
**dadurch gekennzeichnet, dass**:
der Hauptkörper (2) eine Spiralform (S) aufweist und beim Gebrauch des Trägers (1) vertikal ausgerichtet ist;
und dadurch, dass:
der Hauptkörper (2) derart bemessen ist, dass, wenn der Träger (1) im Gebrauch ist und das zur Verbrennung bestimmte Produkt mit Spiralform an dem Verankerungselement (3) verankert ist, die orthogonale Projektion des Profils des Hauptkörpers (2) auf eine vertikale Ebene eine erste Figur bildet, die eine zweite Figur enthält, die durch die orthogonale Projektion des Profils des zur Verbrennung bestimmten Produkts mit Spiralform auf eine vertikale Ebene erhalten wird.

2. Träger (1) nach dem vorhergehenden Anspruch, wobei die erste Figur und die zweite Figur im Wesentlichen übereinstimmen.

3. Träger (1) nach Anspruch 1 oder 2, ferner beinhaltend eine Halterung (4), die an dem Hauptkörper (2) befestigt werden kann und dazu dient, den Hauptkörper (2) beim Gebrauch des Trägers (1) vertikal ausgerichtet zu halten.

4. Träger (1) nach dem vorhergehenden Anspruch, wobei die Halterung (4) einen Schaft (4) beinhaltet, der mit einem ersten Ende (40) davon an dem Hauptkörper (2) befestigt werden kann.

5. Träger (1) nach dem vorhergehenden Anspruch, wobei das zweite Ende (41) des Schafts (4), das dem ersten Ende (40) gegenüberliegt, eine Spitze (411) beinhaltet, die in einen Erdboden gesteckt werden kann, um den Hauptkörper (2) beim Gebrauch des Trägers (1) vertikal ausgerichtet zu halten.

6. Träger (1) nach einem der vorhergehenden Ansprüche, ferner beinhaltend eine Sammelschale (5) zum Auffangen von Asche und Verbrennungsrückständen des zur Verbrennung bestimmten Produktes mit Spiralform.

7. Träger (1) nach Anspruch 4, ferner beinhaltend zumindest einen Stützfuß (6), der an dem zweiten Ende (41) des Schafts (4), das dem ersten Ende (40) gegenüberliegt, derart befestigt werden kann, dass er den Hauptkörper (2) beim Gebrauch des Trägers (1) vertikal ausgerichtet hält.

8. Träger (1) nach einem der Ansprüche von 3 bis 7, wobei der Hauptkörper (2) und die Halterung (4) einteilig ausgeführt sind.

9. Träger (1) nach einem der vorhergehenden Ansprüche, wobei das Verankerungselement (3) an dem Stab (P) der Spiralform (S) des Hauptkörpers (2) angeordnet und quergerichtet zu der Spiralform (S) des Hauptkörpers (2) ist.

10. Träger (1) nach dem vorhergehenden Anspruch, wobei das Verankerungselement (3) einen Abschnitt (30) aufweist, der an dem Stab (P) der Spiralform (S) des Hauptkörpers (2) befestigt ist und eine Stärke aufweist, die sich entlang dessen Ausdehnung, ausgehend von dem Abschnitt (30) und in einer nach außen verlaufenden Richtung, verjüngt.

## Revendications

1. Un support (1) pour un produit ayant une forme de spirale, ce dernier étant destiné à être brûlé pour libérer dans l'air des substances parfumées ou insecticides, le support (1) comprenant:
un corps principal (2);
un élément d'ancrage (3) porté par le corps principal (2) de manière à ancrer, lorsque le support (1) est utilisé, un produit en forme de spirale destiné à être brûlé pour libérer dans l'air des substances parfumées ou insecticides;
**caractérisé en ce que**:
le corps principal (2) a une forme de spirale (S) et est orienté verticalement lorsque le support (1) est utilisé;
et **en ce que**:
le corps principal (2) est dimensionné de manière à ce que, lorsque le support (1) est utilisé et que le produit en forme de spirale destiné à être brûlé est ancré à l'élément d'ancrage (3), la projection orthogonale sur un plan vertical du profil du corps principal (2) forme une première figure qui englobe une deuxième figure qui est obtenue par la projection orthogonale sur un plan vertical du profil du produit en forme de spirale destiné à être brûlé.

2. Le support (1) selon la revendication précédente, dans lequel la première figure et la deuxième figure coïncident essentiellement.

3. Le support (1) selon la revendication 1 ou 2, comprenant en outre un support (4) pouvant être fixé au corps principal (2) pour supporter le corps principal (2) orienté verticalement lorsque le support (1) est utilisé.

4. Le support (1) selon la revendication précédente, dans lequel le support (4) comprend une tige (4) pouvant être fixée par une première extrémité (40) respective au corps principal (2).

5. Le support (1) selon la revendication précédente, dans lequel la deuxième extrémité (41) de la tige (4), opposée à la première extrémité (40), comprend une pointe (411) qui peut être introduite dans un terrain de manière à supporter le corps principal (2) orienté verticalement lorsque le support (1) est utilisé.

6. Le support (1) selon l'une quelconque des revendications précédentes, comprenant en outre un bac de récupération (5) qui récupère la cendre et les résidus de la combustion du produit en forme de spirale destiné à être brûlé.

7. Le support (1) selon la revendication 4, comprenant en outre au moins un pied de support (6), pouvant être fixé à la deuxième extrémité (41) de la tige (4), opposée à la première extrémité (40), de manière à supporter le corps principal (2) orienté verticalement lorsque le support (1) est utilisé.

8. Le support (1) selon l'une quelconque des revendications de 3 à 7, dans lequel le corps principal (2) et le support (4) sont réalisés en corps unique.

9. Le support (1) selon l'une quelconque des revendications précédentes, dans lequel l'élément d'ancrage (3) est disposé au niveau du pôle (P) de la forme en spirale (S) du corps principal (2) et est transversal par rapport à la forme en spirale (S) du corps principal (2).

10. Le support (1) selon la revendication précédente, dans lequel l'élément d'ancrage (3) présente une portion (30) fixée au pôle (P) de la forme en spirale (S) du corps principal (2) et présente une épaisseur qui s'amincit le long de son développement à partir de la portion (30) et en allant vers l'extérieur.
